Europäisches Patentamt

(19) European Patent Office

Office européen des brevets

(11) Numéro de publication: **0 194 932**
**B1**

(12) **FASCICULE DE BREVET EUROPÉEN**

(45) Date de publication du fascicule du brevet:
02.08.89

(51) Int. Cl.⁴: **G 01 P 3/487**

(21) Numéro de dépôt: **86400471.8**

(22) Date de dépôt: **06.03.86**

(54) **Dispositif de détection de la position du rotor pour machine tournante électrique.**

(30) Priorité: **06.03.85 FR 8503414**

(43) Date de publication de la demande:
**17.09.86 Bulletin 86/38**

(45) Mention de la délivrance du brevet:
**02.08.89 Bulletin 89/31**

(84) Etats contractants désignés:
**DE GB IT SE**

(56) Documents cité:
**EP-A-0 107 317**
**DE-A-2 946 013**
**DE-A-3 118 289**
**DE-B-1 268 399**
**FR-A-2 082 876**
**FR-A-2 493 981**

**Boedefeld, Sequenz, "Elektrische Maschinen, eine Einfuehrung in die Grundlagen", 8eme edition, 1971, Springer Verlag Wien, New YORK; Seiten 546,614,615**

(73) Titulaire: **LABINAL, 5 Avenue Newton, F-78180 Montigny le Bretonneux (FR)**

(72) Inventeur: **Vanderschaeghe, Christian, 3 Résidence Mozart, F-95500 Gonesse (FR)**
Inventeur: **Thibault, Alain, 24 Avenue Simon Hayem, F-95210 Saint Gratien (FR)**

(74) Mandataire: **Bernasconi, Jean, CABINET LEMOINE ET BERNASCONI 13, Boulevard des Batignolles, F-75008 Paris (FR)**

LIBER, STOCKHOLM 1989

## Description

La présente invention concerne les dispositifs de détection de position du rotor, et éventuellement de sa vitesse, pour machines électriques tournantes, notamment synchrones, à rotor à aimant permanent et auto-pilotage, du type comprenant, montés sur une telle machine, un ou plusieurs aimants permanents générateurs d'un flux, magnétique, au moins deux sondes ou transducteurs à effet Hall qui sont disposés de manière fixe en regard de ce ou ces aimants permanents et dont la tension de sortie, qui est dépendante de l'intensité de l'induction magnétique créée par ce ou ces aimants, peut être appliquée à un circuit d'asservissement de l'alimentation du stator, et des moyens de défilement en rotation autour de l'axe de rotation du rotor de la machine, produisant une variation alternative du flux magnétique effectivement intercepté par ces sondes à effet Hall.

Ces dispositifs permettent de déterminer la position du rotor à tout instant, et de piloter en conséquence l'alimentation de la machine tournante. De plus, le signal analogique obtenu est continu et précis, il donne accès à la vitesse par calcul, il peut servir à la commutation des phases, et, enfin, il permet de décaler la position de référence, donc d'assurer un pilotage avec avance de phase.

On connaît déjà, par exemple, par le brevet français n 2 493 981 de la présente demanderesse, des dispositifs de ce type dans lesquels le ou les aimants permanents sont disposés de manière fixe, mais concentriquement à l'axe de rotation du rotor et en regard, dans le sens axial, des sondes à effet Hall "tout ou rien", les moyens de défilement en rotation étant constitués par un disque en matière magnétique et ajouré, à deux ouvertures en forme de secteur circulaire, ce disque étant disposé entre ce ou ces aimants et ces sondes et tournant en synchronisme avec le rotor.

On obtient de la sorte une onde alternative, éventuellement triphasée dans le cas ou on utilise trois sondes, mais qui est relativement grossière du fait de la détection par "tout ou rien", chaque alternance se présentant sous la forme d'un profil trapézoïdal à flancs raides, forme qui est peu adaptée pour les fortes puissances. De plus, avec une telle disposition, dans laquelle l'entrefer entre le ou les aimants et les sondes est axial, il est nécessaire de prévoir des dispositions très particulières concernant le montage et le calage afin d'assurer un positionnement parfait et surtout constant dans le temps, de l'ensemble.

C'est pourquoi l'invention a pour but de fournir un dispositif de détection qui, d'une part, soit mieux adapté aux machines de forte puissance, et, d'autre part, supprime la complexité de construction et de calage axial.

Certes, on connaît, d'après le brevet allemand DE-A-2 946 013 (SIEMENS) des dispositifs du genre indicateur de phases présentant une commande de courant statorique pilotée par des sondes de Hall disposées dans l'intervalle situé entre le stator et un rotor à aimant pour délivrer une tension proportionnelle au champ magnétique dans cet espace de façon à générer un signal sinusidal en relation avec la position du rotor. Ce dispositif permet de piloter l'alimentation statorique chaque fois que la tension de Hall s'annule, de façon à egendrer un champ statorique tournant. Toutefois, un tel dispositif ne fournit qu'un indication approximative et surtout discontinue relative à la position du rotor, dont l'utilisaté est faible, en particulier aux faibles vitesses de rotation.

L'ouvrage Bölefeld Sequenze, "Elektrische Maschinen, eine Einführung in die Grundlagen", 8e édition, 1971, Springer Verlag, Wien, New York, pages 546, 614, 615, décrit le principe d'un dispositif de détection de position de rotor utilisant deux capteurs de Hall décalés de 90° et sensibles aux pôles d'un rotor à aimant permanent bipolaire de telle sorte que, si la distribution du champ à la périphérie du rotor est sinusoïdale, on obtient une variation continue sinusoïdale de l'un des capteurs et cosinusoïdale de l'autre.

La description de principe ne donne cependant pas à l'homme de l'art le moyen de réaliser un dispositif pratique dans lequel les phénomènes de nature à troubler le signal recueilli, notamment les harmonies d'ordre supérieur, se trouvent éliminées, alors que, par définition, la machine est destinée à tourner à des vitesses très variables, et ceci tout en obtenant un niveau de signal restant facilement exploitable.

L'invention a donc pour objet un dispositif de détection de position du rotor, et éventuellement de sa vitesse, pour machine électrique tournante, notamment synchrone, à rotor à aimant permanent et à auto-pilotage, du type comprenant, montés sur une telle machine, un ou plusieurs aimants permanents, générateurs d'un flux magnétique, au moins deux sondes ou transducteurs à effet Hall qui sont disposés de manière fixe en regard de ce ou ces aimants permanents et dont la tension de sortie, qui est proportionnelle à l'intensité de l'induction magnétique créée par ce ou ces aimants, peut être appliquée à un circuit d'asservissement de l'alimentation du stator, et des moyens de défilement en rotation autour de l'axe de rotation du rotor de la machine, produisant une variation alternative du flux magnétique effectivement intercepté par ces sondes à effet Hall, dans lequel le ou les aimants permanents sont disposés sur l'arbre du rotor, avec une orientation radiale des pôles, et sont donc entraînés en rotation, de manière synchrone, avec le rotor, cette disposition constituant lesdits moyens de défilement en rotation, tandis que des sondes à effet Hall à sortie linéaire, qui sont fixes, sont quant à elles disposées, suivant le même plan diamétral moyen que ce ou ces aimants, de manière concentrique à celui ou ceux-ci, caractérisé en ce que, pour détecter de façon précise la position angulaire du rotor, en assurant l'élimination des harmoniques d'ordre supérieur, la distance radiale des sondes à effet Hall par rapport à l'axe du rotor est de l'ordre de deux à trois fois l'épaisseur du ou des aimants, également suivant la direction radiale, permettant ainsi d'exploiter le signal sinusoïdal fourni par les sondes de Hall de façon continue.

Grâce à cet agencement, chacune des sondes à effet Hall reçoit comme signal magnétique, qu'elle transforme en signal électrique proportionnel, une onde formée d'au moins une onde sinusoïdale fondamentale correspondant à la variation de l'induction dans l'entrefer au niveau de cette sonde, due au passage du ou des aimants permanents devant elle, la tension fournie par la sonde présentant une amplitude quasi indépendante de la vitesse. Ainsi l'obtention de cette onde sinusoïdale assure un meilleur pilotage pour les machines de forte puissance, par exemple supérieure à 2 kW, la consigne des courants de chaque phase pouvant, dans ce cas, être directement donnée par les signaux des sondes; elle simplifie également le pilotage avec avance de phase; elle permet encore d'obtenir simultanément l'information de vitesse du rotor; enfin, l'information sur la position du rotor est très précise pouvant, par exemple, atteindre + 1° à $\frac{2\pi}{p}$ près si est le nombre de paires de pôles du rotor. Par ailleurs, on évite tout calage axial complexe tel qu'il était précédemment nécessaire, et on supprime le disque mobile qui assurait le défilement en rotation, gagnant donc ainsi encore en encombrement et en poids.

De manière particulièrement avantageuse, le nombre de paires de pôles des aimants permanents est de la forme $p = 2n + 2$, avec n: 0, 1, 2, etc..., soit $p = 2, 6, 10...$, ceci pour des raisons de symétrie et en raison du fait que les aimants disponibles sont parallélépipèdi-ques et que leur aimantation est uniforme et non pas sinusoïdale. De préférence, le ou les aimants permanents du dispositif de détection sont distincts des aimants du rotor lui-même et ils montés sur et en bout d'arbre de ce rotor.

Très avantageusement également, la distance radiale des sondes à effet Hall par rapport à l'axe du rotor est de l'ordre de deux à trois fois l'épaisseur du ou des aimants, également suivant la direction radiale. Cette importance de la distance radiale assure en effet l'élimination des harmoniques d'ordre supérieur et réduit aussi la valeur d'indusion $B_1$ par rapport à $B_2$. De préférence, aussi, la crête d'induction du ou des aimants permanents au niveau, radial, des sondes est supérieure ou égale au seuil de linéarité de ces sondes, ce qui assure un caractère parfaitement sinusoïdal des signaux obtenus et permet donc de bénéficier au maximum des avantages offerts par ce caractère sinusoïdal.

De manière avantageuse encore, il est prévu une culasse de retour de flux de forme cylindrique qui est disposée coaxialement à l'axe du rotor, les sondes à effet Hall étant placées au voisinage immédiat de la surface cylindrique intérieure de cette culasse, ce qui améliore l'amplitude de l'induction au niveau des sondes et supprime la composante tangentielle de l'induction. De préférence, le circuit d'asservissement se présente sous la forme d'un circuit imprimé qui est disposé radialement et fixé au fond de la culasse cylindrique et qui porte les sondes à effet Hall.

Bien qu'à la limite deux sondes à effet Hall disposées en quadrature puissent suffire, on prévoit avantageusement, dans un mode de réalisation particulier, trois sondes disposées à 120° l'une de l'autre par rapport à l'axe du rotor.

D'autres caractéristiques et avantages de l'invention ressortiront de la description d'un exemple de réalisation particulier qui va suivre à titre non limitatif et en regard des dessins annexés sur lesquels:

la figure 1 représente une vue en coupe axiale schématique d'un dispositif de détection conforme à l'invention disposé en bout d'arbre du rotor d'une machine tournante;

la figure 2 représente une vue en coupe diamétrale prise suivant la ligne II - II de la figure 1.

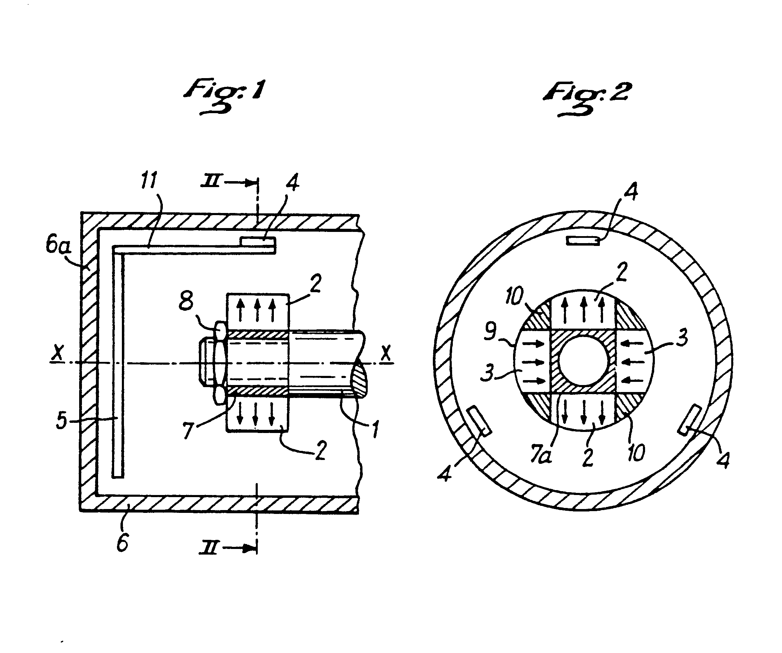

Le dispositif de détection représenté est monté sur l'extrémité 1 de l'arbre de rotor d'une machine tournante non représentée, mais située sur la droite de la fig. 1, qui est enfermée dans un carter également non représenté, cet arbre de rotor tournant autour d'un axe X - X.

Ce dispositif comprend deux paires 2 et 3 d'aimants permanents, trois sondes ou transducteurs linéaires à effet Hall 4 et un circuit imprimé 5 d'asservissement de l'aimentation du stator de la machine, le tout enfermé dans une culasse de retour de flux 6.

Cette culasse 6 est une culasse en matériau magnétique en forme de cuvette cylindrique d'axe X - X, dont le fond est situé à l'opposé de la machine, soit sur la gauche sur la fig. 1, et qui est fixée sur le carter de cette machine par des moyens non représentés.

Les aimants permanents 2 et 3 sont par exemple du type "samariumcobalt" et ils ont une forme sensiblement parallélépipédique et sont appliqués sur quatre méplats orthogonaux 7a d'une pièce 7 qui est rapportée sur l'extrémité d'arbre 1 et maintenue sur celle-ci, avec les aimants, à l'aide de moyens appropriés tels qu'un écrou 8. Ces aimants sont disposés de manière que leur flux soit orienté radialement vers l'extérieur pour la paire, diamétralement opposée, 2, et radialement vers l'intérieur pour la paire orthogonale, également diamétralement opposée, 3. Leur profil extérieur est arrondi de manière à épouser une enveloppe extérieure des quatre aimants, sensiblement cylindrique 9, tandis que des cales de court-circuit 10 sont interposées dans chacun des angles libres délimités par les aimants, afin d'assurer un équilibrage magnétique de l'ensemble.

Ces aimants 2 et 3 sont disposés suivant un plan diamétral moyen P, et les trois sondes à effet Hall sont également placées, à 120° l'une de l'autre par rapport à l'axe X - X, dans ce même plan P, en étant maintenues de manière fixe par rapport à la culasse 6, de façon concentrique aux aimants 2 et 3. Ces sondes sont situées à une distance radiale des aimants 2 et 3 qui est comprise entre deux à trois fois l'épaisseur radiale de ces derniers. Elles sont par ailleurs maintenues fixes, au voisinnage immédiat de la culasse 6, en étant portées à l'extrêmité de supports 11 qui sont parallèles à l'axe X - X et sont eux-mêmes portés en porte-a-faux par le circuit imprimé 5 qui se trouve fixé, à l'aide de moyens non représentés, sur le fond 6a de la culasse de manière à être perpendiculaire à l'axe X-X. Les supports 11 sont, par exemple, des pièces moulées dans les quelles sont incorporés des conducteurs reliant les sondes 4 au circuit 5.

Le fonctionnement succinct du dispositif de détection ainsi décrit est le suivant:

Lors de la rotation du rotor, les aimants permanents 2 et 3 produisent une induction qui, au niveau des sondes 4, présente essentiellement uniquement une harmonique fondamentale sinusoïdale qui est transformée, par ces mêmes sondes, en un signal électgrique également sinusoïdal, l'ensemble des trois signaux constituant une onde triphasée qui, par l'intermédiaire du circuit 5, est utilisée pour piloter l'alimentation de la machine tournante et fournir une indication précise de la position angulaire du rotor, ainsi que, par dérivation, de sa vitesse.

## Revendications

1. Dispositif de détection de position du rotor, et éventuellement de sa vitesse, pour machine électrique tournante, notamment synchrone, à rotor à aimant permanent et à auto-pilotage, du type comprenant, montés sur une telle machine, un ou plusieurs aimants permanents (2, 3), générateurs d'un flux magnétique, au moins deux sondes ou transducteurs à effet Hall (4) qui sont disposés de manière fixe en regard de ce ou ces aimants permanents (2, 3) et dont la tension de sortie, qui est proportionnelle à l'intensité de l'induction magnétique créée par ce ou ces aimants, peut être appliquée à un circuit (5) d'asservissement de l'alimentation du stator, et des moyens (1) de défilement en rotation autour de l'axe de rotation (X - X) du rotor de la machine, produisant une variation alternative du flux magnétique effectivement intercepté par ces sondes à effet Hall, dans lequel le ou les aimants permanents (2, 3) sont disposés sur l'arbre (1) du rotor, avec une orientation radiale des pôles, et sont donc entraînés en rotation, de manière synchrone, avec le rotor, cette disposition constituant lesdits moyens (1) de défilement en rotation, tandis que des sondes à effet Hall à sortie linéaire (4), qui sont fixes, sont quant à elles disposées, suivant le même plan diamétral moyen (P) que ce ou ces aimants (2, 3), de manière concentrique à celui ou ceux-ci, caractérisé en ce que, pour détecter de façon précise la position angulaire du rotor, en assurant l'élimination des harmoniques d'ordre supérieur, la distance radiale des sondes à effet Hall (4) par rapport à l'axe (X - X) du rotor est de l'ordre de deux à trois fois l'épaisseur du ou des aimants (2, 3), également suivant la direction radiale, permettant ainsi d'exploiter le signal sinusoïdal fourni par les sondes de Hall de façon continue.

2. Dispositif selon la revendication 1, caractérisé en ce que le nombre de paires de pôles des aimants permanents (2, 3) est de la forme p = 2n + 2, avec n = 0, 1, 2, etc.

3. Dispositif selon l'une quelconque des revendications 1 et 2, caractérisé en ce que le ou les aimants permanents du dispositif de détection sont distincts des aimants du rotor lui-même et sont montés sur et en bout d'arbre de ce rotor.

4. Dispositif selon l'une quelconque des revendications 1 à 3, caractérisé en ce que la crête d'induction du ou des aimants permanents (2, 3) au niveau, radial des sondes (4) est supérieure ou égale au seuil de linéarité de ces sondes.

5. Dispositif selon l'une quelconque des revendications 1 à 4, caractérisé en ce qu'il est prévu une culasse (6) de retour de flux, de forme cylindrique, qui est disposée coaxialement à l'axe (X - X) du rotor, les sondes à effet Hall (4) étant placées au voisinage immédiat de la surface cylindrique intérieure de cette culasse (6).

6. Dispositif selon l'une quelconque des revendications 1 à 5, caractérisé en ce que le circuit d'asservissement (5) se présente sous la forme d'un circuit imprimé qui est disposé radialement et fixé au fond (6a) de la culasse cylindrique (6) et qui porte les sondes a effet Hall (4).

7. Dispositif selon l'une quelconque des revendications 1 à 6, caractérisé en ce qu'il est prévu trois sondes (4) disposées à 120° l'une de l'autre par rapport à l'axe (X - X) du rotor.

8. Dispositif selon l'une quelconque des revendications 1 à 7, caractérisé en ce que des cales de court-circuit (10) sont interposées dans les angles séparant les aimants permanents (2, 3).

## Patentansprüche

1. Gerät für die Erfassung der Position und eventuell der Drehzahl des Ankers von Elektromaschinen, insbesondere von elektrischen Synchronmaschinen mit Permanentmagnetanker und automatischer Steuerung eines Typs, der, montiert auf einer solchen Maschine, einen oder mehrere Permanentmagneten (2, 3), Generatoren mit magnetischem Kraftfluß, mindestens zwei Halleffektsonden oder -meßwertgeber (4) enthält, die fest an diesen Permanentmagneten (2, 3) angeordnet sind und deren zur Kraft von diesem oder diesen Magneten erzeugten Magnetinduktion proportionale Ausgangsspannung an einen Regelungsstromkreis (5) für die Statorversorgung angelegt werden kann, und Abspulmittel (1), die sich um die Rotationsachse (X - Y) des Rotors der Maschine drehen und dabei eine Alternativ-Variation des magnetischen Kraftflusses erzeugen, die Effektiv von diesen Halleffekt-sonden erfaßt werden, in welchem der oder die Permanentmagnet-(en) auf der Welle (1) des Ankers mit radial orientierten Polen angeordnet sind und deshalb mit dem Anker synchron in Rotation angetrieben werden, diese Anordnung bildet die besagten Drehspulmitte (1), während die Halleffektsonden mit Linearausgang (4), die ihrerseits auf der gleichen mittleren Diametralebene (P) wie dieser oder diesen Magnet(en) (2, 3) und zwar konzentrisch zu diesem oder diesen angeordnet sind,

dadurch gekennzeichnet

daß, um die genaue winkelige Position des Rotors zu erfassen und damit die Eliminierung von höheren Oberschwingungen zu gewährleisten, die Radialdistanz der Halleffektmeßfühler (4) zur Achse (X - X) des Rotors der zwei- bis dreifachen Dicke des oder der Magneten (2, 3) entspricht, gleichfalls in radialer Richtung, somit kann das von den Halleffektmeßfühlern ausgesendete sinusförmige Signal kontinuierlich verwertet werden.

2. Gerät nach Anspruch 1, dadurch gekennzeichnet, daß die Anzahl dar Polpaare der Permanentmagneten (2, 3) die Form p = 2n + 2, mit n = 0, 1, 2, u.s.w. hat.

3. Gerät nach Anspruch 1 und 2, dadurch gekennzeichnet daß der oder die Permanentmagnet(en) des Erfassungsgerätes sich von den Magneten des Ankers selbst unterscheiden und auf und am Wellenende dieses Ankers montiert sind.

4. Gerät nach Anspruch 1 bis 3, dadurch gekennzeichnet, daß die Induktionsspitze des oder dar Permanentmagneten (2, 3) auf der Radialebena der Meßfühler (4) hoher als die Linearitätsschwelle dieser Meßfühler ist oder dieser Linearitätsschwelle entspricht.

5. Gerät nach Anspruch 1 bis 4, dadurch gekennzeichnete daß ein Zylinderformiges Rückfluß-Poljoch (6) vorgesehen ist, des koaxial zur Achse (X - X) des Rotors angeordnet ist, wobei die Helleffektmeßfühler (4) unmittelbar neben der zylindrischen Innenfläche dieses Poljochs (6) plaziert sind.

6. Gerät nach Anspruch 1 bis 5, dadurch gekennzeichnet, daß der Regelstromkreis (5) die Form eines gedruckten Schaltkreises hat, dar radial angeordnet und am Boden (6a) des zylindrischen Poljochs (6) befestigt ist und die Halleffektmeßfühler (4) trägt.

7. Gerät nach Anspruch 1 bis 6, dadurch gekennzeichnet, daß drei Meßfühler (4) vorgesehen sind, die im Winkel von 120° zueinander im Verhältnis zur Achse (X - X) des Rotors angeordnet sind.

8. Gerät nach Anspruch 1 bis 7, dadurch Gekennzeichnet, daß die Deckleisten des Kurzschlusses (10) in die Winkel eingezogen sind und die Permanentmagneten (2, 3) trennen.

**Claims**

1. Device for detecting the position, and possibly the velocity, of a rotor of an electrically operated rotary and in particular synchronous machine having a rotor with a permanent magnet and with a self-adjusting facility, of the type comprising, mounted on such a machine, one or a plurality of permanent magnets (2, 3) for generating a magnetic flux, by means of two Hell effect transducers or sensors (4) which are rigidly disposed opposite this or these permanent magnet(s) (2, 3) and of which the output voltage, which is proportional to the strength of the magnetic induction created by this or these magnet(s), may be applied to a circuit (5) for controlling the power supply to the stator, and comprising scanning means (1) adapted to rotate about the axis of rotation (X - X) of the rotor of the machine, producing an alternating variation in the magnetic flux effectively intercepted by these Hall effect sensors, in which the permanent magnet(s) (2, 3) is/are disposed on the shaft (1) of the rotor, with the poles radially orientated, and are therefore driven in synchronism and in rotation with the rotor, this arrangement constituting the said rotary scanning means (1), while the effect sensors which have a linear output (4) are fixed and are disposed in the same median diametral plane (P) as the said magnet(s) (2, 3) and concentrically in respect thereof, characterised in that in order accurately to determine the angular position of the rotor, while reliably eliminating any harmonics of a higher level, the radial distance of the Hall effect sensors (1) from the axis (X - X) of the rotor is around two to three times the thickness of the magnet(s) (2, 3) likewise in a radial direction, so making it possible continuously to utilise the sinusoidal signal provided by the Hall sensors.

2. Device according to Claim 1, characterised in that the number of pairs of poles of the permanent magnet(s) (2, 3) is of the form p = 2n + 2, with n = 0 1,2, etc.

3. Device according to either of Claims 1 or 2, characteriseed in that the permanent magnet(s) of the detecting device are distinct from the magnets of the rotor itself and are mounted on and at the end of the rotor shaft.

4. Device according to any one of Claims 1 to 3, characterised in that the induction peak of the permanent magnet(s) (2, 3) at the radial level of the sensors (4) is greater than or equal to the linearity threshold of these sensors.

5. Device according to any one of Claims 1 to 4, characterised in that a cylindrically-shaped flux return yoke (6) is provided which is disposed coaxially in respect of the rotor axis (X - X) the Hall effect sensors (4) being placed in the immediate vicinity of the interior cylindrical surface of this yoke (6).

6. Device according to any one of Claims 1 to 4, characterised in that the control circuit (5) taxes the form of a printed circuit which is radially disposed and fixed to the end (6a) of the cylindrical yoke (6) and carries the Hall effect sensors (4)

7. Device according to any one of Claims 1 to 6, characterised in that three sensors (4) are provided, disposed at intervalls of 120° from one another in relation to the rotor axis (X -X).

8. Device according to any one of Claims 1 to 7, characterised in that short-circuit wedges (10) are inserted into the corners separating the permanent magnet(s) (2, 3).

*Fig. 1*

*Fig. 2*

1